# EUROPÄISCHE PATENTSCHRIFT

(11) **EP 1 008 769 B1**
(45) Veröffentlichungstag und Bekanntmachung des Hinweises auf die Patenterteilung: **30.03.2005**
(21) Anmeldenummer: 99123560.7
(22) Anmeldetag: 26.11.1999
(51) Int. Cl.: F16B 13/08

(54) **Selbsthaltendes Befestigungselement**
Fastening device with self-locking anchoring
Elément de fixation à ancrage autobloquant

(30) Priorität: 11.12.1998 DE 19857403
(43) Veröffentlichungstag der Anmeldung: 14.06.2000
(73) Patentinhaber: Gräwe, Bernd, 45701 Herten (DE)
(72) Erfinder: Gräwe, Bernd, 45701 Herten (DE)
(74) Vertreter: Valentin, Ekkehard, Dipl.-Ing.

(56) Entgegenhaltungen:
- EP-A- 0 716 256
- DE-A- 19 926 060
- DE-C- 4 312 339

## Beschreibung

Die Erfindung betrifft ein selbsthaltendes Befestigungselement zum Einschlagen oder Drücken in ein Bohrloch, umfassend einen Grundkörper sowie mindestens zwei korrespondierend keilförmig ausgebildete, gegeneinander verschiebbare Bereiche, wobei beim Einführen der Gesamtquerschnitt der Keilbereiche gleich dem oder kleiner als der Bohrlochdurchmesser ist und beim Angreifen von axialen Auszugskräften an dem Befestigungselement dieser Gesamtquerschnitt durch die axiale Verschiebung der Keilflächen zueinander so vergrößert wird, daß das Befestigungselement kraftschlüssig gegen die Bohrlochwandung gepreßt wird.

In der DE 43 12 339 C1 ist eine Klemmschelle zur Halterung von Langformteilen beschrieben. Deren Fußteil besteht aus einem Steckdübel, der in ein Bohrloch in einer Wand selbstklemmend einsteckbar ist. Der Steckdübel besteht aus zwei Teilkörpern, die eine in Dübellängsrichtung verlaufende Trennebene besitzen. Die Teilkörper weisen auf ihren zueinander zugewandten Flächenbereichen an der Trennebene eine sägezahnartige Keilflächenausbildung auf. Beim Einschieben des Dübels ist der Gesamtdurchmesser der beiden Teilkörper gleich wie oder kleiner als der Bohrlochdurchmesser. Bei Angreifen von axialen Auszugskräften wird dieser Gesamtdurchmesser durch die axiale Verschiebung der Keilflächen zueinander so vergrößert, daß der Dübelmantel kraftschlüssig gegen die Bohrlochwandung gepreßt wird. Hierbei sind beide Teilkörper über einen bandförmigen Materialstreifen an ihrem in Einsteckrichtung vom liegenden Ende miteinander verbunden. Dieser Materialstreifen bewirkt beim Einschieben des Dübels, daß sich in Sollposition die beiden Teilstücke wieder gegeneinander verschieben, so daß die Klemmkraft zur Festsetzung des Dübels aufgebracht wird. Ferner ist der zweite Teilkörper über einen zweiten bandförmigen Materialstreifen an seinem in Einsteckrichtung hinten liegenden Ende mit dem ersten Teilkörper verbunden. Dieser bis zum Erreichen der Sollposition lockere Materialstreifen soll sich bei einem in ein Bohrloch eingeschobenen Dübel nach Art einer Druckfeder an den Stirnflächen der beiden Teilstücke abstützen. Bei diesem Prinzip der Verklemmung von konisch ausgebildeten Flächen erweist sich als nachteilig, daß die Haltefunktion nur in einem engen Toleranzbereich des Bohrlochdurchmessers erreichbar ist, weil bei zu großen Durchmessern kein genügend großer Reibschluß zustandekommt. Abgesehen davon, daß sich der Materialstreifen beim Einschieben in das Bohrloch verkanten kann, wird auch kein ausreichender Druck aufgebaut. Dieser bzw. eine Vorspannung könnte zwar durch eine Zugbewegung erhöht werden, jedoch würde das zu einem Schlupf, d.h. einen Abstand zur Bohrungswand führen.

Aus dem deutschen Gebrauchsmuster 83 28 369 U1 ist ein Befestigungselement, insbesondere für Installationsrohre oder -kabel an einer Wand oder Decke, bekannt, das einen Schaft mit Spreizkörpem an der Schaftoberfläche zur kraftschlüssigen Verbindung mit einer Bohrlochwand aufweist, wobei die Spreizkörper als Exzenter ausgebildet sind, deren Drehpunkte im Bereich der Schaftoberfläche liegen. Bei der hier vorgeschlagenen Exzenter-Lösung weichen die Exzenter beim Einschieben des Befestigungselementes zur Seite und gleiten an der Bohrlochwand entlang. Wird Zug auf das Befestigungselement ausgeübt, bewegt der belastete Schaft die an der Bohrlochwand anliegenden Exzenter auseinander, d.h. es kommt zu einer Durchmesservergrößerung, und erzeugt somit eine Gegenkraft. Als nachteilig erweist sich bei dieser Lösung, daß der Durchmesser des Bohrloches entscheidend die Funktion bestimmt. Schwankungen im Bohrloch, die sich beispielsweise durch einen Bohrerverschleiß oder ungleichmäßigem Wandmaterial einstellen können, verhindern eine optimale Haltewirkung, weil kein gleichmäßig verteilter Reibschluß aller Exzenter zur Bohrlochwand mehr vorhanden ist. Ferner kann es zu einem Schlupf kommen, weil erst eine Zugkraft ausgeübt werden muß, um die Haltewirkung einzustellen. Des weiteren ist das Einstecken des Befestigungselementes bei einem zu engen Bohrloch nur erschwert möglich.

Schließlich ist aus der europäischen Patentanmeldung EP 0 716 256 A1 eine Vorrichtung zur Befestigung von Kabeln, Rohren und dgl. an Wänden, bestehend aus einem Kabelhalter sowie einem Befestigungsende, bekannt. Das Befestigungsende besteht aus zumindest zwei korrespondierend keilförmig geformten, gegeneinander verschiebbaren Bereichen, die sich nach dem Einschiebevorgang des Befestigungsendes in das Bohrloch unter Einwirkung einer axialen Auszugskraft gegeneinander verschieben. Die Befestigungswirkung wird durch ein zusätzlich vorgesehenes Verankerungselement mit Lamellen, das in das Ende des Bohrloches eingreift, verstärkt.

Ausgehend von diesem Stand der Technik liegt der Erfindung die Aufgabe zugrunde, ein selbsthaltendes Befestigungselement gattungsgemäßer Art zu schaf fen, das eine gute Haltefunktion trotz Schwankungen des Bohrlochdurchmessers gewährleistet.

Diese Aufgabe wird mittels eines Befestigungselementes mit den Merkmalen des Anspruchs 1 gelöst. Vorteilhafte Ausgestaltungen sind in den Unteransprüchen offenbart.

Zur Lösung dieser Aufgabe wird vorgeschlagen, daß ein Ring vorgesehen ist, der über seine Umfangsfläche mit dem Grundkörper des Befestigungselementes verbunden ist, und der Ringdurchmesser so bemessen ist, daß der Gesamtdurchmesser des Befestigungselementes im Ausgangszustand größer als der Bohrlochdurchmesser ist, wobei dieser Ring aus einem elastisch verformbaren Material besteht, so daß er im eingeführten Zustand durch seine Ovalisierung eine Vorspannung aufbringt und daß dieser Ring derart angeordnet ist, daß er im eingeführten Zustand an die Stirnfläche einer Keilfläche angrenzt und aufgrund seiner Ovalisierung eine Verschiebung der Keilflächen hin zu einem vergrößerten Gesamtquerschnitt bewirkt.

Der erfindungsgemäß vorgeschlagene Ring erfüllt demnach zwei Funktionen. Zum einen bringt er durch seine Ovalisierung eine Vorspannung bereits im Befestigungselement auf, auf das noch keine axiale Auszugskraft wirkt. Weil der Ringdurchmesser so bemessen ist, daß der Gesamtdurchmesser des Befestigungselementes im Ausgangszustand größer ist als der Bohrlochdurchmesser, wird der Ring beim Einführvorgang unter Druckeinwirkung in ein Oval verformt. Der ovalisierte Ring liegt in vorgespannter Form an der Bohrlochwandung an. Die gewünschte Vorspannung wird unabhängig von einem schwankenden Bohrlochdurchmesser erreicht, der beispielsweise durch Verschleiß des Bohrers oder inhomogenes Wandmaterial entstehen kann. Der Ring sorgt für einen Durchmesserausgleich, wobei mit zunehmender Ovalität die Vorspannung erhöht wird. Außerdem wird ein Bewegungsschlupf in Zugrichtung sicher verhindert. Schließlich erlauben Veränderungen der Ring-Wandstärke und/oder des Ring-Außendurchmessers, daß der Eindrückwiderstand und damit auch die Vorspannung variiert werden kann; eine dickere Wandstärke führt zu einem größeren Eindrückwiderstand und auch einer höheren Vorspannung.

Zum anderen wird vorgeschlagen, daß der Ring so angeordnet ist, daß er im eingeführten Zustand an die Stirnfläche einer Keilfläche angrenzt. Hierbei wird durch zunehmende Ovalisierung und somit Längung des Rings die Verschiebung der Keilflächen hin zu einem vergrößerten Gesamtquerschnitt des Befestigungselementes unterstützt. Zudem behindert der ovalisierte Ring als Wegwiderstand die Lösebewegung der Keile durch Verminderung des Gesamtquerschnitts.

Aufgrund dieser beiden Funktionen und Wechselwirkung mit dem Verkeilungsprinzip wird ein Befestigungselement mit hoher Haltefunktion bereitgestellt, das trotz schwankendem Bohrlochdurchmesser eine hohe Verankerung garantiert. Das erfindungsgemäße Befestigungselement eignet sich für Bohrlöcher mit unterschiedlichen Durchmessern. Es bedarf keiner exakten Bohrung.

Vorzugsweise ist hinter dem Ring, in Einsteckrichtung gesehen, ein Gegenlager vorgesehen. Die Ringumfangsfläche ist einerseits an einer Stelle an dem Gegenlager und andererseits an einer Stelle an dem Befestigungselement befestigt. Im eingeführten Zustand befindet sich der Ring zwischen dem Gegenlager und der Stirnfläche eines Keilbereichs.

Bei einer ersten bevorzugten Ausführungsform ist das Befestigungselement ein Steckdübel, der sich aus einem Dübelgrundkörper und einem Dübelendkörper zusammensetzt. Der Dübelendkörper besteht aus einem mit dem Dübelgrundkörper einstückig ausgebildeten ersten Keilbereich und einem mit dem ersten Keilbereich verbundenen, hierzu korrespondierenden, kleineren zweiten Keilbereich. Der Ring ist so an dem ersten Keilbereich angeordnet, daß die Endfläche des Dübelgrundkörpers als Gegenlager dient.

Bei der ersten Ausführungsform wird das Verklemmprinzip mittels zweier konusförmig ausgebildeter Bereiche erreicht. Es ist denkbar, daß sowohl der erste als auch der zweite Keilbereich auf ihren einander zugewandten Flächenbereichen eine sägezahnartige Keilflächenausbildung aufweisen.

Neben der Ausbildung als Steckdübel wird die Ausbildung des Befestigungselementes als Steckschlaufe vorgeschlagen. Die Steckschlaufe setzt sich aus einem ersten und einem zweiten Steckende, die in das Bohrloch eingeführt werden, sowie einem Schlaufenmittelstück zusammen. Das zweite Steckende weist eine Keilform auf und bildet somit den ersten Keilbereich. Der zweite Keilbereich ist mit dem ersten Steckende verbunden, vorzugsweise über einen bandförmigen Materialstreifen. Das erste Steckende ist so geformt, daß beim Einführen in das Bohrloch sowohl der erste als auch zweite Keilbereich derart daran zur Anlage kommen und sich gegeneinander verschieben, daß sie ein annähernd zylinderförmiges Gesamtstück bilden. Bei dieser Ausführungsform ist der Ring an dem ersten Steckende in einer solchen Höhe befestigt, daß er im Einführungszustand mit der Stirnfläche des zweiten Keilbereichs in Kontakt kommt. Als Gegenlager ist ein keilförmiges Element in Einführrichtung hinter dem Ring an dem ersten Steckende befestigt.

Bei der Ausbildung als Steckdübel wird die Verbindung zwischen dem zweiten Keilbereich mit dem ersten Keilbereich ebenfalls über einen bandförmigen Materialstreifen an den in Einsteckrichtung vorn liegenden Enden erreicht. Der Materialstreifen wird beim Einführvorgang in das Bohrloch durch die Verschiebebewegung der Keilbereiche stramm gezogen bzw. sogar elastisch vorgespannt. Durch diese elastische Vorspannung wird erreicht, daß dann, wenn das Befestigungselement seine vorläufige Sollposition oder auch endgültige Sollposition innerhalb des Bohrloches erreicht hat, der zweite Keilbereich sich gegenüber dem ersten Keilbereich so verschiebt, daß der Durchmesser des Befestigungselementes erweitert wird. Folglich wird die Klemmkraft zur Festsetzung des Befestigungselementes in dem Bohrloch zusätzlich zu der Vorspannung aufgrund des Rings erhöht.

Das Befestigungselement wird vorzugsweise aus Kunststoff gefertigt, vorteilhafterweise spritzgegossen. Dieses Material zeigt den Vorteil, daß sich das Befestigungselement samt Ring von Hand in das Bohrloch drücken lassen und bringt Kostenvorteile mit sich. Daneben ist auch die Fertigung aus Metall denkbar.

Das Befestigungselement ist mit dem Kopfelement einstückig oder zweistückig ausgebildet. Als Kopfelement kommen alle bekannten Ausführungsformen zum Halten von Langformteilen, wie beispielsweise Kabel, Rohre, Leitungen etc., in Frage. Das Kopfelement umfaßt vorzugsweise Klemmbacken zum Einrasten von Langformteilen oder einen Doppelbügel. Es empfiehlt sich, daß das Kopfelement eine Hakenform mit einer Schlagfläche zur Unterstützung der Einführbewegung aufweist.

Weitere Einzelheiten und Vorteile der Erfindung ergeben sich aus den Ansprüchen und der nachfolgenden Beschreibung: Hierbei zeigen:
- Figur 1: einen Steckdübel nach einer ersten Ausführungsform der Erfindung in Seitenansicht;
- Figur 2: eine Steckschlaufe nach einer zweiten Ausführungsform der Erfindung in Seitenansicht;
- Figuren 3 bis 5: Varianten des Kopfelementes des Steckdübels nach Figur 1 in Seitenansicht;
- Figur 6: die in ein Bohrungsloch eingeführte Steckschlaufe nach Figur 2 in Seitenansicht.

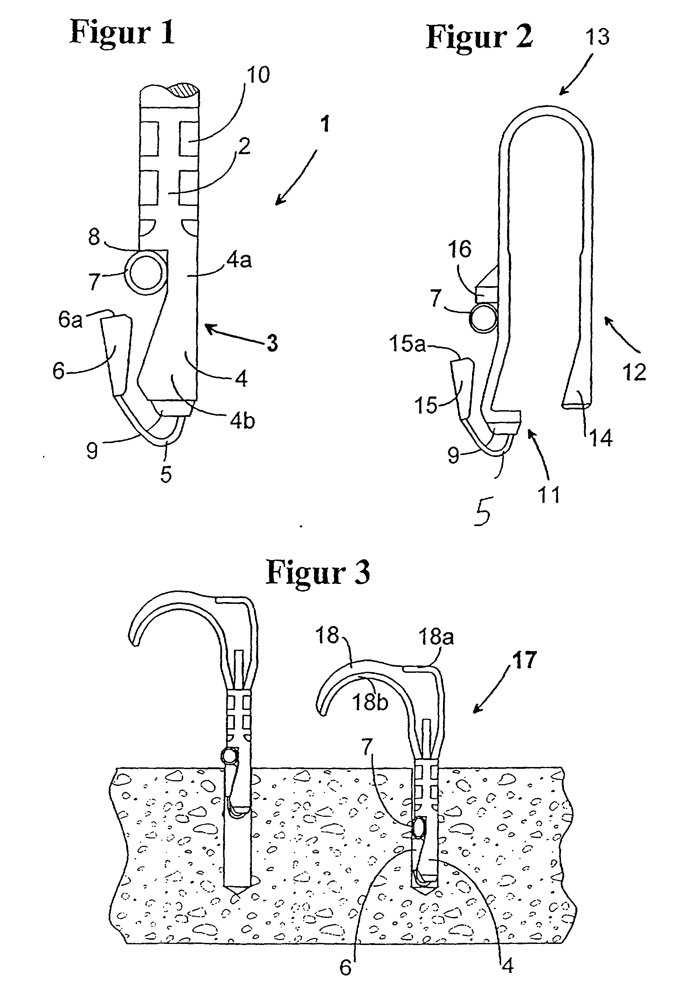

Der in Figur 1 dargestellte Steckdübel 1 als eine Ausführung des Befestigungselementes setzt sich aus einem zylindrischen Dübelgrundkörper 2 und einem Dübelendkörper 3 zusammen. Der Dübelgrundkörper 2 kann ein- oder zweistückig mit verschiedenen Kopfelementen versehen sein (Figuren 3 bis 5). Der Dübelendkörper 3 besteht aus einem mit dem Dübelgrundkörper 2 einstückig ausgebildeten ersten Keilbereich 4 sowie einem mit dem Keilbereich 4 über einen bandförmigen Materialstreifen 5 verbundenen, korrespondierend ausgebildeten kleineren zweiten Keilbereich 6. Im Auflagezustand bilden der erste und zweite Keilbereich 4 und 6 als Dübelende eine annähernd zylindrische Form. Der erste Keilbereich 4 weist einen halsförmigen Teil 4a, der sich von dem Dübelgrundkörper nach unten erstreckt, sowie einen sich daran anschließenden konusförmigen Teil 4b auf.

Der Ring 7, der aus elastischem Material besteht, ist an dem halsförmigen Teil 4a über seine Umfangsfläche befestigt. Ferner ist der Ring 7 an der Endfläche 8 des Dübelgrundkörpers 2 befestigt, der somit als Gegenlager dient. Im eingeführten Zustand des Steckdübels in ein Bohrloch befindet sich der Ring 7 in dem Zwischenraum, der durch die Endfläche 8 des Dübelgrundkörpers, dem halsförmigen Teil 4a des ersten Keilbereichs 4 und der Stirnfläche 6a des zweiten Keilbereichs 6 gebildet wird. Der Dübelendkörper weist zusätzlich ein abgeschrägtes Endteil 9 auf. In dem Dübelgrundkörper 2 sind Einschneidungen 10 vorgesehen.

Figur 2 zeigt eine Steckschlaufe nach einer anderen Ausführungsform eines Befestigungselementes. Diese setzt sich aus einem ersten und einem zweiten Stekkende 11 und 12, die in das Bohrloch eingeführt werden, sowie einem Schlaufenmittelstück 13 zusammen. Das zweite Steckende 12 weist eine Keilform auf und bildet somit den ersten Keilbereich 14. Der zweite Keilbereich 15 ist mit dem ersten Steckende 11 verbunden, vorzugsweise über einen bandförmigen Materialstreifen 5. Das erste Steckende 11 ist so geformt, daß beim Einführen in das Bohrloch sowohl der erste als auch zweite Keilbereich 14 und 15 derart daran zur Anlage kommen und sich gegeneinander verschieben, daß sie ein annähernd zylinderförmiges Gesamtstück bilden.

Bei dieser Ausführungsform ist der Ring 7 an dem ersten Steckende 11 in einer solchen Höhe befestigt, daß er im eingeführten Zustand mit der Stirnfläche 15a des zweiten Keilbereichs 15 in Kontakt kommt. Als Gegenlager ist ein keilförmiges Element 16 in Einführrichtung vor dem Ring 7 an dem ersten Steckende 11 befestigt.

Das Funktionsprinzip der Erfindung der kombinierten Ring- mit einer Keilverklemmung wird mittels Figur 3 deutlich, die einen Steckdübel während des Einführvorgangs in ein Bohrungsloch sowie im eingeführten Zustand zeigt.

Der Ringdurchmesser ist so bemessen, daß der Gesamtdurchmesser dieses Abschnitts des Befestigungselementes, hier des Steckdübels, im Ausgangszustand größer als der Bohrlochdurchmesser ist. Während des Einführvorgangs durch Drücken oder Einschlagen wird das Befestigungselement gegen den Widerstand des Ringes in das Bohrloch eingeschoben. Im eingeführten Zustand bringt der Ring durch seine Verformung eine Vorspannung im unbelasteten Befestigungselement auf, die auch bei einer ungleichmäßigen Bohrlochwandung wirkt.

Während beim Einführen der Gesamtquerschnitt der miteinander korrespondierenden Keilbereiche 4 und 6 gleich dem oder kleiner als der Bohrlochdurchmesser ist, wird beim Angreifen von axialen Auszugskräften dieser Gesamtquerschnitt durch die axiale Verschiebung der Keilflächen zueinander so vergrößert wird, daß der Steckdübel kraftschlüssig gegen die Bohrlochwandung gepreßt wird. Durch die Ovalisierung und Längung unterstützt der Ring 7 eine Verschiebung der Keilflächen hin zu einem vergrößerten Gesamtquerschnitt und verhindert gleichzeitig als Wegwiderstand die Lösebewegung der Keile.

Der Steckdübel nach der ersten Ausführungsform kann mit unterschiedlichen Kopfelementen 17 versehen sein. Nach Figur 3 ist dieses Kopfelement ein Haken 18, der neben einer Schlagfläche 18a eine Umgreifungsfläche 18b und somit Halterung für Rundlangkörper aufweist. Der Haken kann an unterschiedlich große Durchmesser der Rundlangkörper angepaßt sein.

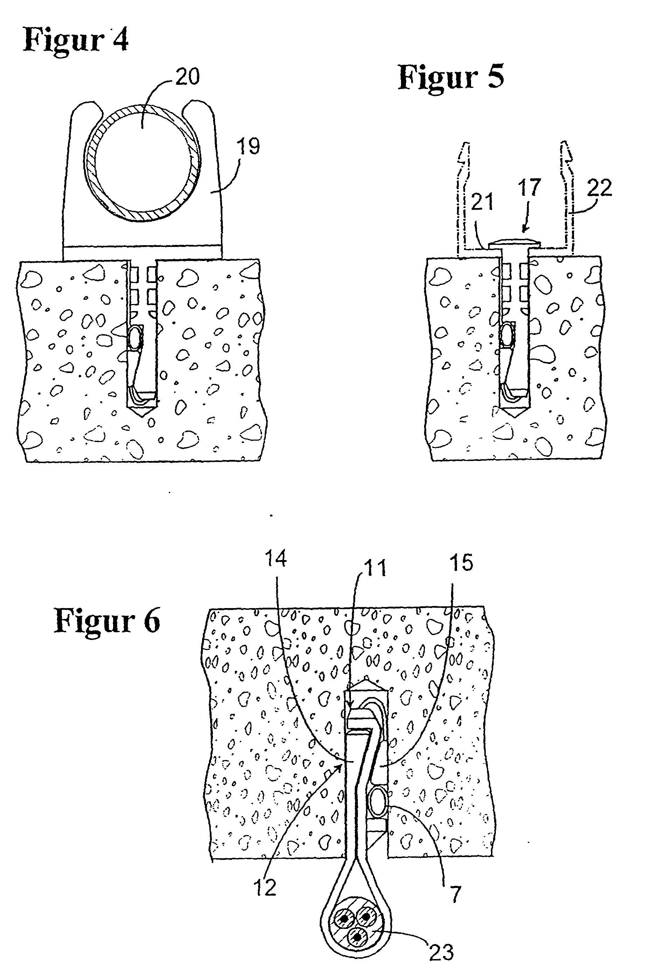

Das Kopfelement kann, wie in Figur 4 dargestellt, aus Klemmbacken 19 bestehen, in die ein Rundlangkörper 20 einrasten kann. Nach Figur 5 ist das Kopfteil 17 einstückig mit dem Dübelgrundkörper ausgebildet. Es weist eine Bohrung 21 zur Halterung von Gegenständen 22 auf.

Figur 6 zeigt schließlich eine in ein Bohrungsloch eingeführte Steckschlaufe. Die beiden Steckenden 11 und 12 der Schlaufe sowie ein Keil 15 kommen so zur Anlage gegeneinander, daß sie einen annähernd zylindrischen Körper bilden. Der zu halternde Rundkörper, hier eine Kabelführung 23, wird in die gebildete Schlaufe eingeschoben. Es ist ebenso möglich, das freie zweite Steckende 12 um das Kabel zu legen und die beiden Steckenden 11 und 12 zusammen mit dem zweiten Keilbereich 15 in das Bohrloch zu schieben und somit eine Verbindung von Rundkörper und Wand zu schaffen.

## Patentansprüche

1. Selbsthaltendes Befestigungselement ① zum Einschlagen oder Drücken in ein Bohrloch, umfassend einen Grundkörper ② sowie mindestens zwei korrespondierend keilförmig ④, ⑥ ausgebildete, gegeneinander verschiebbare Bereiche, wobei beim Einführen der Gesamtquerschnitt der Keilbereiche gleich dem oder kleiner als der Bohrlochdurchmesser ist und beim Angreifen von axialen Auszugskräften an dem Befestigungselement dieser Gesamtquerschnitt durch die axiale Verschiebung der Keilflächen zueinander so vergrößert wird, daß das Befestigungselement kraftschlüssig gegen die Bohrlochwandung gepreßt wird,
**dadurch gekennzeichnet,**
**daß** ein Ring (7) vorgesehen ist, der über seine Umfangsfläche mit dem Grundkörper (4a, 11) verbunden ist, und der Ringdurchmesser so bemessen ist, daß der Gesamtdurchmesser des Befestigungselementes im Ausgangszustand größer als der Bohrlochdurchmesser ist,
**daß** der Ring (7) aus einem elastisch verformbaren Material besteht, so daß er im eingeführten Zustand durch seine Ovalisierung eine Vorspannung aufbringt
und **daß** der Ring (7) derart angeordnet ist, daß er im eingeführten Zustand an die Stirnfläche einer Keilfläche (6a, 15a) angrenzt und aufgrund seiner Ovalisierung eine Verschiebung der Keilflächen (6, 15) hin zu einem vergrößerten Gesamtquerschnitt bewirkt.

2. Befestigungselement nach Anspruch 1,
**dadurch gekennzeichnet,**
**daß** hinter dem Ring (7), in Einsteckrichtung gesehen, ein Gegenlager (8, 16) vorgesehen ist, an dem die Ringumfangsfläche ebenfalls fest anliegt.

3. Befestigungselement nach Anspruch 1;
**dadurch gekennzeichnet,**
**daß** es ein Steckdübel ist (1), der sich aus einem Dübelgrundkörper (2) und einem Dübelendkörper (3) zusammensetzt, wobei der Dübelendkörper aus einem mit dem Dübelgrundkörper einstückig ausgebildeten ersten Keilbereich (4) und einem mit dem ersten Keilbereich verbundenen, hierzu korrespondierenden, kleineren zweiten Keilbereich (6) besteht und der Ring (7) so an dem ersten Keilbereich (4) angeordnet ist, daß die Endfläche (8) des Dübelgrundkörpers als Gegenlager dient.

4. Befestigungselement nach Anspruch 3,
**dadurch gekennzeichnet,**
**daß** der zweite Keilbereich (6) mit dem ersten Keilbereich (4) über einen bandförmigen Materialstreifen (5) an ihren in Einsteckrichtung vorn liegenden Enden verbunden ist.

5. Befestigungselement nach Anspruch 3,
**dadurch gekennzeichnet,**
**daß** sowohl der erste (4) als auch der zweite (6) Keilbereich auf ihren einander zugewandten Flächenbereichen eine sägezahnartige Keilflächenausbildung aufweisen.

6. Befestigungselement nach Anspruch 1,
**dadurch gekennzeichnet,**
**daß** es eine Steckschlaufe ist mit einem ersten (11) und zweiten (12) Steckende, die in das Bohrloch eingeführt werden, sowie einem Schlaufenmittelstück (13) zur Verbindung der beiden Steckenden (11, 12),
wobei das zweite Steckende (12) eine Keilform aufweist und somit den ersten Keilbereich (14) bildet,
und der zweite Keilbereich (15) mit dem ersten Steckende (11) verbunden ist,
wobei das erste Steckende (11) so geformt ist, daß beim Einführen in das Bohrloch sowohl der erste (14) als auch zweite (15) Keilbereich derart daran zur Anlage kommen und sich gegeneinander verschieben, daß sie ein annähernd zylinderförmiges Gesamtstück bilden,
und der Ring (7) an dem ersten Steckende (11) in einer solchen Höhe befestigt ist, so daß er im eingeführten Zustand an die Stirnfläche (15a) des zweiten Keilbereichs (15) angrenzt, und
**daß** ein keilförmiges Element (16) in Einführrichtung hinter dem Ring (7) als dessen Gegenlager an dem ersten Steckende (11) befestigt ist.

7. Befestigungselement nach Anspruch 6,
**dadurch gekennzeichnet,**
**daß** der zweite Keilbereich (15) mit dem ersten Steckende (11) über einen bandförmigen Materialstreifen (5) an ihren in Einsteckrichtung vorn liegenden Enden verbunden ist.

8. Befestigungselement nach Anspruch 4 oder 7,
**dadurch gekennzeichnet,**
**daß** der Materialstreifen (5) beim Einführvorgang in das Bohrloch durch die Verschiebebewegung der Keilbereiche stramm gezogen bzw. sogar elastisch vorgespannt ist.

9. Befestigungselement nach Anspruch 1,
**dadurch gekennzeichnet,**
**daß** es ein Kopfelement aufweist und aus Kunststoff oder aus Metall gefertigt ist.

10. Befestigungselement nach Anspruch 9,
**dadurch gekennzeichnet,**
**daß** es mit dem Kopfelement einstückig oder zweistückig ausgebildet ist.

11. Befestigungselement nach Anspruch 9,
**dadurch gekennzeichnet,**
**daß** das Kopfelement Klemmbacken umfaßt zum Einrasten von Langformteilen, wie ein Kabel, ein Rohr und dgl.

12. Befestigungselement nach Anspruch 9,
**dadurch gekennzeichnet,**
**daß** das Kopfelement einen Doppelbügel umfaßt.

13. Befestigungselement nach Anspruch 9,
**dadurch gekennzeichnet,**
**daß** das Kopfelement eine Hakenform mit einer Schlagfläche aufweist.

## Claims

1. A self-anchoring fastening element (1) for driving or pressing into a drill hole, including a base member (2) and at least two mating wedge-shaped areas (4, 6) that are movable towards one another, wherein the overall cross section of the wedge-shaped areas is equal to or smaller than the diameter of the drill hole upon insertion and when axial pull-out forces are applied to the fastening element this overall cross section is increased by the axial movement of the wedge-shaped surfaces towards one another such that the fastening element is pressed non-positively against the wall of the drill hole,
**characterized in that**
a ring (7) is provided that is in contact with the base member (4a, 11) over its entire circumferential surface, and the diameter of the ring is of such dimension that the overall diameter of the fastening element is larger in the initial state than the diameter of the drill hole,
that the ring (7) is made from an elastically deformable material, so that when inserted it applies a bias as a result of its oval deformation,
and that the ring (7) is arranged in such manner that when inserted it contacts the frontal surface of a wedge-shaped surface (6a, 15a) and by its oval deformation causes the wedge-shaped surfaces (6, 15) to move so that they assume a greater overall cross section.

2. The fastening element according to claim 1,
**characterized in that**
a counter bearing (8, 16) is provided behind the ring (7) when viewed in the direction of insertion, against which the circumference of the ring is also braced in fixed manner.

3. The fastening element according to claim 1,
**characterized in that**
it is an inserted wall plug (1) that includes a dowel base member (2) and a dowel end member (3), wherein the dowel end member includes a first wedge-shaped area (4) that is conformed integrally with the dowel base member, and a smaller, second wedge-shaped area (6) connected to the first wedge-shaped area and mating therewith, and the ring (7) is arranged on the first wedge-shaped area (4) in such manner that the end surface (8) of the dowel base member serves as a counter bearing.

4. The fastening element according to claim 3,
**characterized in that**
the second wedge-shaped area (6) is connected to the first wedge-shaped area (4) via a strip-like tongue of material (5) at the leading ends thereof in the direction of insertion.

5. The fastening element according to claim 3,
**characterized in that**
both the first wedge-shaped area (4) and the second wedge-shaped area (6) have a sawtooth wedged conformation on the surfaces thereof that face each other.

6. The fastening element according to claim 1,
**characterized in that**
it is an insertion loop having a first (11) and a second (12) insertion leg, which are introduced into the drill hole, and a loop middle element (13) for connecting the two insertion legs (11, 12),
wherein the second insertion leg (12) is wedge-shaped and thus forms the first wedge-shaped area (14),
and the second wedge-shaped area (15) is attached to the first insertion leg (11),
wherein the first insertion leg (11) is shaped such that when it is inserted into the drill hole both the first (14) and the second (15) wedge-shaped areas come into contact with one another and are displaced towards one another in such manner that they form an approximately cylindrical combined element,
and the ring (7) is fixed on the first insertion leg (11) at such a level that in the inserted condition it lies flush with the frontal surface (15a) of the second wedge-shaped area (15), and
that a wedge-shaped element (16) is affixed to the first insertion leg (11) behind the ring (7) in the direction of insertion to serve as a counter bearing therefore.

7. The fastening element according to claim 6,
**characterized in that**
the second wedge-shaped area (15) is connected to the first insertion leg (11) via a strip-like tongue of material (5) at the leading ends thereof in the direction of insertion.

8. The fastening element according to claim 4 or 7,
**characterized in that**
the material tongue (5) is drawn tight or even elastically biased by the shifting movement of the wedge-shaped areas during the insertion operation into the drill hole.

9. The fastening element according to claim 1,
**characterized in that**
it includes a head element and is made from plastic or metal.

10. The fastening element according to claim 9,
**characterized in that**
it is conformed with the head element as a single unit or a two-part unit.

11. The fastening element according to claim 9,
**characterized in that**
the head element includes clamping jaws for gripping long parts such as a cable, a pipe or similar.

12. The fastening element according to claim 9,
**characterized in that**
the head element includes a double clasp.

13. The fastening element according to claim 9,
**characterized in that**
the head element has the shape of a hook with a strike surface.

## Revendications

1. Elément de fixation autoportant (1) à enfoncer ou presser dans un trou foré, comprenant une base (2) ainsi qu'au moins deux zones correspondantes réalisées en forme de coin (4,6), déplaçables l'une contre l'autre, dans lequel, lors de l'introduction, la totalité de la section transversale des zones de coin est égale ou inférieure au diamètre du trou foré et, lorsque des forces d'extraction axiales s'exercent sur l'élément de fixation, ladite totalité de la section transversale est agrandie par le déplacement axial des surfaces de coin l'une vers l'autre, de telle sorte que l'élément de fixation soit pressé contre la paroi du trou foré de manière à s'emboîter complémentairement,
**caractérisé en ce que**
un anneau (7) est prévu, lequel est relié par sa surface circonférentielle à la base (4a, 11), et le diamètre de l'anneau est proportionné de telle sorte que le diamètre total de l'élément de fixation soit plus grand à l'état sorti que le diamètre du trou foré,
l'anneau (7) est constitué d'un matériau élastique déformable, de telle sorte qu'il induise une prétension à l'état introduit, en raison de son ovalisation,
et l'anneau (7) est disposé de telle sorte qu'il soit contigu, à l'état introduit, à la surface frontale d'une surface de coin (6a, 15a) et provoque, en raison de son ovalisation, un déplacement des surfaces de coin (6,15) vers une totalité de section transversale plus grande.

2. Elément de fixation selon la revendication 1,
**caractérisé en ce que**
derrière l'anneau (7), vu dans la direction d'enfichage, un contre-palier (8,16) est prévu, sur lequel la surface circonférentielle de l'anneau repose également de manière fixe.

3. Elément de fixation selon la revendication 1,
**caractérisé en ce que**
il s'agit d'une cheville enfichable (1), qui est composée d'une base de cheville (2) et d'un corps d'extrémité de cheville (3), dans lequel le corps d'extrémité de cheville est constitué d'une première zone de coin (4) configurée en un seul tenant avec la base de cheville et d'une deuxième zone de coin (6) plus petite, reliée à la première zone de coin et correspondant à celle-ci et l'anneau (7) est disposé sur la première zone de coin (4) de telle sorte que la surface d'extrémité (8) de la base de cheville sert de contre-palier.

4. Elément de fixation selon la revendication 3,
**caractérisé en ce que**
la deuxième zone de coin (6) est reliée à la première zone de coin (4) par une plaque de matériau (5) en forme de bande, à ses extrémités reposant à l'avant dans la direction d'enfichage.

5. Elément de fixation selon la revendication 3,
**caractérisé en ce que**
aussi bien la première (4) que la deuxième (6) zone de coin présentent sur leurs surfaces tournées l'une vers l'autre une configuration de surface de coin en dents de scie.

6. Elément de fixation selon la revendication 1,
**caractérisé en ce que**
il s'agit d'une cheville à expansion, avec une première (11) et une deuxième (12) extrémité d'enfichage, qui sont introduites dans le trou foré, ainsi qu'une pièce centrale de cheville (13) pour relier les deux extrémités d'enfichage (11,12),
dans lequel la deuxième extrémité d'enfichage (12) présente une forme de coin et forme ainsi la première zone de coin (14),
et la deuxième zone de coin (15) est reliée à la première extrémité d'enfichage (11),
dans lequel la première extrémité d'enfichage (11) est formée de telle sorte que, lors de l'introduction dans le trou foré, aussi bien la première (14) que la deuxième (15) zone de coin viennent s'appuyer sur celle-ci et se déplacent l'une contre l'autre, de telle sorte qu'elles forment une pièce complète de forme approximativement cylindrique,
et l'anneau (7) est fixé sur la première extrémité d'enfichage (11) à une hauteur telle qu'il soit contigu, à l'état introduit, à la surface frontale (15a) de la deuxième zone de coin (15), et
un élément en forme de coin (16) est fixé, dans la direction d'introduction, sur la première extrémité d'enfichage (11) derrière l'anneau (7), comme contre-palier de celui-ci.

7. Elément de fixation selon la revendication 6,
**caractérisé en ce que**
la deuxième zone de coin (15) est reliée à la première extrémité d'enfichage (11) par une plaque de matériau en forme de bande (5), à ses extrémités reposant à l'avant dans la direction d'enfichage.

8. Elément de fixation selon la revendication 4 ou 7,
**caractérisé en ce que**
la plaque de matériau (5) est raidie lors du processus d'introduction dans le trou foré par le mouvement de déplacement des zones de coin, respectivement prétensionnée élastiquement.

9. Elément de fixation selon la revendication 1,
**caractérisé en ce que**
il présente un élément de tête et est fabriqué en plastique ou en métal.

10. Elément de fixation selon la revendication 9,
**caractérisé en ce que**
il est configuré en une seule pièce ou en deux pièces avec l'élément de tête.

11. Elément de fixation selon la revendication 9,
**caractérisé en ce que**
l'élément de tête comprend des mâchoires de serrage pour verrouiller des pièces oblongues, comme un câble, un tuyau et similaire.

12. Elément de fixation selon la revendication 6,
**caractérisé en ce que**
l'élément de tête comprend un étrier double.

13. Elément de fixation selon la revendication 9,
**caractérisé en ce que**
l'élément de tête présente une forme de crochet avec une surface de butée.
